# EUROPEAN PATENT APPLICATION

(11) **EP 4 527 261 A1**
(43) Date of publication of application: **26.03.2025**
(21) Application number: 23198193.7
(22) Date of filing: 19.09.2023
(51) Int. Cl.: A47J 31/44

(54) **A BEVERAGE CAPSULE OPENER**

(71) Applicant: Société des Produits Nestlé S.A., 1800 Vevey (CH)
(72) Inventor: HAERI, Martin, 1006 Lausanne (CH)

(57) **Abstract**

The present invention relates to a capsule opener (1, 100) for emptying solid and/or liquid contents of an extracted beverage capsule. The capsule (2) comprises a body (4) forming a compartment containing the contents and a lid for closing said compartment. The capsule opener (1, 100) comprises a bottom portion (10, 110) and a storage compartment (20, 120). The bottom portion (10, 110) includes a bottom portion housing with at least one cutting protrusion (12, 112, 115). The at least one protrusion (12) is arranged for piercing through and opening the lid. The storage compartment (20, 120) is configured to receive the solid and/or liquid contents from the capsule (2). The storage compartment (20, 120) is arranged below the at least one protrusion (12).

## Description

### Field of the invention

The present invention relates to a capsule opener for emptying solid and/or liquid contents of an extracted beverage capsule, a method of use of a capsule opener and a method of emptying a capsule compartment.

### Background of the invention

Capsules containing a liquid and/or solid for use in beverage preparation machines are well known in the food industry and consumer goods domain. Such capsules in combination with a preparation machine allow a consumer to prepare a single serving of a beverage such as drip coffee, espresso coffee, tea, hot chocolate drink, or even liquid foodstuffs such as soup or infant formula on command. Typically, the capsule comprises a body and a lid. The body can be made of aluminum, plastic, paper, or wood. After use, the capsule may be disposed and/or recycled. In some applications, e.g., coffee or tea, a residual of the solid and/or liquid contents, e.g., coffee grounds or tea leaves, remains in the capsule after preparing the single serving.

Prior to recycling, it may be desired to separate the residual solid and/or liquid contents from the capsule body as the residuals (also *"solid and*/*or liquid contents"* herein) can provide an obstacle in the recycling process. Removing the solid and/or liquid contents can be cumbersome in view of the size of the capsule. Further, the number of capsules has risen in the past and new efficient techniques for a quick and simple separation of the liquid and/or solid contents from the capsule are necessary.

Consequently, it is an object of the present invention to provide a method and a device which provide for a simple, efficient, and quick separation of the liquid and/or solid contents and a body or remainder of the capsule.

### Solution to the problem

A first aspect of the present invention relates to a capsule opener for emptying solid and/or liquid contents of an extracted beverage capsule. The capsule comprises a body forming a compartment containing the contents and a lid for closing said compartment. The capsule opener comprises a bottom portion and a storage compartment. The bottom portion includes a bottom portion housing with at least one protrusion. The at least one protrusion is arranged for piercing through and opening the lid. The storage compartment is configured to receive the solid and/or liquid contents from the capsule. The storage compartment is arranged below the at least one protrusion.

A "capsule opener" as used herein may mean a device configured to open a lid of a capsule, in particular after the intended use of the capsule. The capsule opener is in particular configured to prepare a capsule for recycling and to open and/or detach parts of the capsule, e.g., a portion of the lid.

"Extraction" as mentioned herein may mean the preparation of a food or drink, such as coffee or tea, as mentioned above. After extraction, a part of the ingredients used for the preparation of the food or drink may remain in the compartment. Although the capsule opener is useful for removing solid and/or liquid contents after extraction, the present capsule opener can also be used to remove these contents instead of extraction, e.g., when a capsule is defective.

Solid and/or liquid contents may refer to any contents in the capsule. The solid and/or liquid contents may relate to the preparation of a serving of a beverage such as ingredients. Example ingredients are coffee, e.g., drip coffee, espresso coffee, tea, hot chocolate drink, or even liquid foodstuffs such as soup or infant formula. The solid and/or liquid contents may have any suitable form, i.e., powders, leaves, and/or granulates. The solid or liquid content may be suitable for extraction or dissolution in a liquid medium, in particular water. In other embodiments the solid and/or liquid contents could also be structures within the capsule that aid in the preparation of the beverage or liquid foodstuff, e.g., filtering inserts, walls, container, or operating elements inside the body.

A body of the capsule may have a cup-shape and may hold the liquid and/or solid contents described above. The lid may close the cup-shape. Example bodies have a frustoconical shape. The capsule containing roasted and grounded coffee can be placed in a dedicated compartment of a beverage preparation machine. The machine comprises water-injection blades that pierce the lid of the capsule and inject high pressure and high temperature water inside the capsule to extract the aromas of the coffee powder inside. The result of this example is a coffee type of beverage coming out of the machine and the remaining capsule with a pierced lid and some wet coffee powder inside.

A protrusion as used herein may mean any structure extending from the bottom portion housing. In some embodiments, the bottom portion housing and protrusion are integrally formed, while in other embodiments the protrusions and the bottom portion housing are formed as different parts. Example protrusions are knives, blades, and cutting edges. The protrusion is suitable to cut through a lid of a capsule.

Opening the lid may mean that that a portion of the lid is opened that allows removal of the liquid and/or solid contents. An opening created may be suitable to allow the contents to pass through.

The bottom portion may include a capsule receiving surface against which the lid side of the capsule can be pressed. In some embodiments, the bottom portion may include a recessed capsule receiving surface. The recess may orient an inserted capsule with respect to the protrusions such that the correct portion of the capsule is opened.

The capsule opener may pierce the lid of the capsule, such that the contents contained therein are removed from the capsule. Since the storage compartment is arranged below the at least one protrusion, any contents contained in the capsule may automatically fall into the storage compartment. Preferably, during intended use, below means in the direction of gravity. In a preferred embodiment, the capsule opener comprises an opening, e.g., defined by the at least one protrusion, through which the contents of the capsule may fall. For illustration, the capsule opener provided herein may be considered to be similar to a (citrus) juicer. A capsule is pushed onto the capsule opener like an orange or lemon half onto a juicer. The device provided herein may be a manual stand-alone device or may be integrated in a system or machine. For example, a beverage preparation machine may comprise a module having the capsule opener described herein. The capsule opener may be manually operated (such as a conventional juicer) or automatically (e.g., similar to known automatic juicers).

The at least one protrusion is preferably a cutting protrusion. In a preferred embodiment, the capsule opener is configured to create an opening in the lid of at least 40, 50, 60, 70 or 80% of the surface of the lid. The surface of the lid may be the surface perpendicular to the longitudinal axis of the capsule. Thereby, it is ensured that the solid or liquid contents can be removed quickly and efficiently from the capsule.

Preferably, the bottom portion comprises a sieve, wherein the sieve is arranged between the storage compartment at the at least one protrusion. Thereby, the contents of the capsule may be filtered and parts of the lid (or body) that may have been separated from the capsule by the cutting protrusion from the capsule can be filtered from the liquid and/or solid contents.

The sieve preferably has mesh openings larger than a ground coffee particle size, in particular at least 3 to 5 mm. Thereby, any portions of the capsule that may have been cut by the protrusion of filtered out and can be recycled as well.

Preferably, the capsule opener further comprises a top portion. The top portion may include a top portion housing with a capsule holder to hold the capsule therein. The capsule holder may be arranged at least partially opposite of the at least one protrusion when the top portion and the bottom portion are in operative position. The top portion may help protecting a user. The top portion may include a manual gripping portion for holding the capsule in a fixed position. The top portion may be used to press the capsule onto the protrusion like an orange on a juicer, such that a user may turn the top portion with the capsule to cut a, e.g., circular, hole into the capsule with the protrusion.

In a variation, the top portion may fix the capsule in a position and prevent a rotation between the capsule and the bottom portion. In this embodiment, the protrusions may be movable with respect to the bottom portion.

Preferably, the capsule holder is movable towards the bottom portion in order to arrange the bottom and top portions in the operative position. The at least one protrusion is configured to pierce through the lid during said relative movement of the top and bottom portions to create an opening in the lid. Thereby, an opening is created to remove the contents of the capsule.

Preferably, the capsule holder is rotatable with respect to the bottom portion in the operative position in order to enlarge the opening in the lid. The capsule holder and/or the bottom portion may contain guiding surfaces for the rotation. In some embodiments, an outer surface of the bottom portion and/or the capsule holder may form such a guiding surface.

Preferably, the capsule holder includes one or more holder sidewalls. The one or more holder sidewalls may have a conical shape and/or the capsule holder may include a holder bottom wall. Thereby, the capsule holder may surround the capsule, which may ensure a tight grip when pushed against the bottom portion by a user.

Preferably, at least one of the one or more holder sidewalls and the holder bottom wall includes one or more surface projections, such as gripping ridges. The one or more surface projections extend in a radial direction with respect to the capsule holder. The one or more surface projections may be configured to frictionally engage a capsule inserted into the capsule holder. Thereby, the capsule may be securely held by the capsule holder.

Alternatively, the bottom portion may have coupled thereto a capsule holder configured to hold the capsule against the one or more protrusions. The capsule holder may be configured to grip the body and/or the flange of the capsule. For example, the capsule holder may be configured to grip only the flange of the capsule.

The capsule holder preferably includes a holding ring configured to hold the body and/or flange of the capsule. The capsule holder, in particular the holding ring, may include gripping sections configured to grip over a rim of the capsule. The gripping sections may include a joint and may be foldable or bendable. The gripping sections may be locked in a gripping position.

Preferably, the top portion and/or the bottom portion comprise a manual holding portion. The manual holding portion may include at least one of rubber, a roughened surface, ridges, edges, and/or other gripping features. The manual holding portion may be arranged on an exposed side surface of the bottom section, the top section, and/or the storage compartment.

The bottom section, the top section, and/or the storage compartment may each be releasably connectable.

The at least one protrusion may be retractable. The at least one protrusion may be movable along an axis of the bottom portion. In the retracted position, the at least one protrusion may be protected. In the extended position the protrusion may be exposed, and a capsule may be opened. Thereby, injuries can be prevented when the capsule opener is not in use.

The at least one protrusion may be mounted on an internal surface inside the bottom portion. The at least one protrusion may be movable with respect to the rest of the bottom portion. Movable may include a movement along an axis of the bottom portion, towards a capsule or capsule receiving portion of the capsule opener and/or a rotation around an axis of the bottom portion. The bottom portion may include a biasing mechanism, such as one or more springs or flexible bodies, that biases the at least one protrusion towards the extended position. In other embodiments, the biasing mechanism biases the at least one protrusion towards the retracted position. The biasing mechanism may be released, preferably by pressing on a button positioned on an external wall of the bottom portion. Then, the biasing mechanism may push the at least one protrusion from the retracted position to the extended position. Additionally, the bottom portion may include a loading mechanism that retracts the protrusion(s) back into the retracted position.

Preferably, the capsule opener comprises a central protrusion and/or at least one peripheral protrusion. The central protrusion may be configured to pierce the lid and remove the content inside the capsule. The peripheral protrusion may be configured to remove the entire lid and to facilitate the removal of the content inside the capsule. The peripheral protrusions are there to help the opening of the lid and to facilitate the fall of the remaining coffee inside the capsule.

In a preferred implementation, the capsule opener comprises an actuator. The actuator may be configured to move the at least one protrusion towards the capsule or capsule receiving portion and/or rotate the at least one protrusion. Preferably the actuator is configured to rotate the at least one protrusion around a center axis of the capsule or the capsule opener. Thereby, the convenience of using the actuator is improved. In other words, a user only has to place the capsule onto the capsule opener without additionally requiring a twisting or rotation of the capsule.

In a preferred implementation, the at least one protrusion comprises a cutting section, such as an edge, knife, or blade. Preferably, the cutting section is configured to cut the lid along a cutting line extending at least partially along a radially outer contour of lid. In some embodiments, the cutting line may form a closed contour. Thereby, the entire content of the capsule may be removed.

Preferably, the cutting line of the at least one protrusion defines a closed or substantially closed shape. The shape may be uninterrupted. For example, the cutting line may have an O-shape or a C- shape. The cutting line may be circular, oval, or rectangular, or any other suitable form.

Preferably, the bottom portion includes a duct, wherein a first duct opening may be defined by the cutting line, wherein the sieve is arranged in the duct and wherein the storage compartment is placed at a second duct opening.

Preferably, the at least one protrusion is triangular. More preferably, the protrusion is saw-toothed. Thereby, a particularly simple protrusion that is suitable to cut through the lid is provided. The protrusion may be made from or comprise a rigid material, such as a metal or plastic. For example, the protrusion may be made out of steel or aluminum or polypropylene.

Preferably, the capsule opener comprises a plurality of protrusions. For example, the capsule opener may comprise two, three, five, ten or more protrusions. The protrusions may be arranged along the contour of the lid and/or along a cutting line. The protrusions may be arranged directly next to each other, or there may be a gap in between two protrusions. The protrusions may be arranged along the entire cutting line or only along a part of the cutting line. The protrusions may define a closed shape or loop, or an open shape as described above.

The body of the capsule may comprise a conical side wall. The conical side wall may comprise an outwardly extending peripheral rim or flange. The lid may be attached to the side wall via the rim or flange. The capsule body may comprise a bottom wall connected to the conical side wall. The capsule may have a frustoconical shape. The bottom wall may have a frustoconical shape, too. The conical side wall and the conical bottom wall may extent at different angles with respect to the longitudinal axis.

A further aspect of the invention relates to a method of use of a capsule opener. The method comprises the following steps:
- providing a capsule opener as described above;
- forming an opening in the lid of the capsule with the at least one protrusion; and
- emptying the solid and/or liquid contents from the capsule compartment into the storage compartment.

A further aspect of the present invention relates to a method of emptying a capsule compartment. The method comprises the following steps:
- providing a capsule comprising a body and a lid, the body forming a compartment containing solid and/or liquid contents after extraction of the capsule and the lid closing said compartment;
- providing a capsule opener including a bottom portion and a storage compartment, wherein the bottom portion comprises at least one protrusion;
- placing the capsule onto the bottom portion with the lid facing downward;
- piercing the lid with the protrusion to form an opening in the lid;
- emptying the solid and/or liquid contents from the capsule compartment into the storage compartment.

In a preferred embodiment, the capsule is inserted into a capsule holder of a top portion or of the bottom portion. The lid is exposed towards the at least one protrusion when held in the capsule holder.

In a preferred embodiment, the method comprises the step of twisting the top and bottom portion before, during and/or after pushing the lid on the protrusions.

In a preferred embodiment, the opening of the lid comprises or encompasses at least 40%, 50%, 60%, 70% or 80% of the surface area of the lid before opening.

A further aspect of the present invention relates to a system comprising a capsule and a capsule opener as described above.

### Brief description of the drawings

The subject matter of the invention will be explained in more detail in the following text with reference to preferred exemplary and non-limiting embodiments which are illustrated in the attached schematic drawings. These figures disclose embodiments of the invention for illustrational purposes only. In particular, the disclosure provided by the figures and description is not meant to limit the scope of protection conferred by the invention.
**Figure 1** shows a schematic illustration of a capsule opener according to a first embodiment of the invention and an illustrative process of removing liquid and/or solid contents from a capsule.
**Figure 2** shows a schematic illustration of a capsule opener according to a second embodiment of the invention.
**Figure 3** shows a schematic illustration of a bottom portion of the capsule opener of **figure 2****.**
**Figure 4** shows a top view of the bottom portion of **figure 3****.**
**Figures 5 and 6** show cross-sections of the bottom portion of **figure 3****.**
**Figure 7** shows a schematic illustration of a storage compartment of the capsule opener of **figure 2****.**
**Figures 8a to 8e** show a sequence of removal of liquid and/or solid contents of a capsule.

### Detailed description

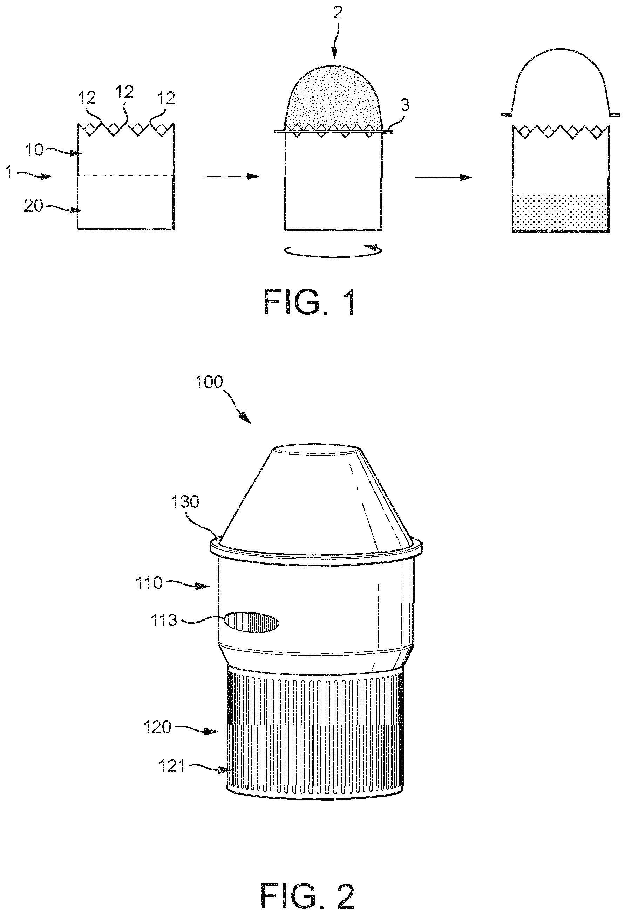

**Figure 1** shows a first embodiment of a capsule opener 1. The capsule opener 1 has a cylindrical shape and is hollow. This results in the capsule opener 1 having a tubular shape. The cylindrical shape may have a diameter corresponding to the diameter of a capsule 2, i.e., the diameter may be similar to the diameter of a capsule, in particular a coffee capsule. The capsule 2 may include a cup-shaped body. The capsule may have a height of at least 10, 15, 20, 22, 25, 27, or 28 mm and/or at most 60, 50, 45, 40, 35, 33, 30 or 29 mm. The body may have a diameter of at least 10, 15, 20, 25, 27, 29, 30 or 31 mm and/or a diameter of at most 60, 50, 45, 40, 35, 33, or 31 mm.

The capsule 2 may have a rim. The rim may have a radial width of at least 1, 2, 2.5, 2.8, 3, 3.2, or 3.4 mm and/or a radial width of at most 10, 8, 6, 5, 4.5, 4, 3.8 or 3.5 mm. A wall of the body may have a thickness of at least 0.1, 0.13, 0.15, 0.16, 0.17 or 0.18 mm and/or at most 0.5, 0.4, 0.3, 0.25, 0.22, 0.20 or 0.19 mm. In one particular embodiment, the body has a diameter of 31 mm and a rim may have an outer diameter of about 37 mm. The body may have a height of about 28 mm.

The capsule opener 1 includes a bottom portion 10 and a storage compartment 20. Bottom portion 10 and storage compartment 20 are integrally formed. In other embodiments, as will be described in more detail hereinafter, the bottom portion 10 and the storage compartment 20 may also be separable.

The bottom portion 10 includes at least one protrusion. In the embodiment shown in **figure 1****,** an upper rim of the bottom portion 10 has a zig-zag shape forming several cutting protrusions 12 configured to pierce a lid of the capsule 1. Other shapes such a saw-toothed profile or an irregular ragged profile are also possible. The cutting protrusions 12 extend around the entire circumference of the hollow cylindrical shape. In variations, the protrusions 12 may be spaced apart from each other or the bottom portion may only include, e.g., one, two, or three protrusions.

Preferably, the one or more protrusions are located at a radial width from a central longitudinal axis of the bottom portion 10 that is inferior (e.g., slightly inferior) to the radius of the body of the capsule. For example, the protrusions may be spaced at least 10, 12, 14, or 15 mm and/or less than 30, 25, 20, 17, or 16 mm from the central longitudinal axis. Thereby, the lid of the capsule 2 may be cut without having to cut through the more rigid body 4 of the capsule 2.

In the embodiment shown, the protrusions 12 are formed integrally and/or monolithically as part of the bottom portion 10. However, in other embodiments, the protrusions 12 and the bottom portion 10 may be formed as separate parts and/or from different materials, and the protrusions 12 may be directly or indirectly attached to the bottom portion 10. For example, the protrusions may be made of a metal, e.g., steel, and the bottom portion may be made of a plastic.

The second, lower part of the hollow cylindrical shape may form the storage compartment 20. The storage compartment 20 includes a bottom closure that closes a bottom opening of the hollow cylinder. Thereby, a space is formed that collects any liquid and/or solid contents that are removed from the capsule 2.

In order to empty the capsule 2, a user may hold the capsule 2 and direct the lid (not shown in **figure 1**) of the capsule 2 towards the cutting protrusions 12. The user pushes the lid of the capsule 2 against the protrusions 12. The protrusions 12 pierce through the lid and may cut a, e.g., circular, hole. The user may additionally turn or twist the capsule opener and the capsule with respect to each other while pushing the capsule against the cutting protrusions 12 or thereafter. Thereby, a cutout in the shape of the cutting protrusions is generated in the capsule.

Preferably, such as in the embodiment shown in **figure 1**, the cutout is circular, although other shapes are possible (e.g., oval, rectangular, quadratic, octagonal, etc.). The circular cutout of the lid falls into the storage compartment 20. Furthermore, the contents of the capsule 2 fall through the hollow bottom portion 10 into the storage compartment 20. Thereafter, the empty capsule 2 can be disposed separately from the contents of the capsule such as ground coffee. Thus, a relatively simple device is provided that is suitable for home use while allowing a user to separate the components of the capsule and dispose of each component accordingly, e.g. by composting the coffee grounds and recycling the capsule material.

The capsule opener shown in **figure 1** may be a handheld device that is suitable for home use. Alternatively, the capsule opener may form a part of a recycling device. The recycling device may automatically load, open, and empty capsules as shown in **figure 1****.** As a further alternative, the described components could be provided as part of a beverage preparation machine (e.g., a beverage preparation machine configured to extract a beverage from a capsule). The handling of the capsule may be automated, e.g., using actuators.

Although this is not shown in the drawings, a user may additionally be provided with a separate top portion including a top portion housing with a capsule holder to hold the capsule 2 therein. The top portion housing forms a capsule receptacle that can be used to hold the capsule 2 and to push the capsule 2 onto the protrusions 12, thereby reducing a risk of injury for the user. Advantageously, the user may rotate or twist the capsule 2 while pushing the capsule 2 onto the protrusions 12 and/or thereafter.

Figures 2 to 8e show a capsule opener 100 according to a second embodiment of the invention. The capsule opener 100 includes a storage compartment 120, a bottom portion 110 and a capsule holder 130. The capsule opener 100 may generally have a cylindrical, e.g. circular cylindrical, shape as shown in **figure 2****.** As shown, the bottom portion 110 and the storage compartment 120 may have different diameters.

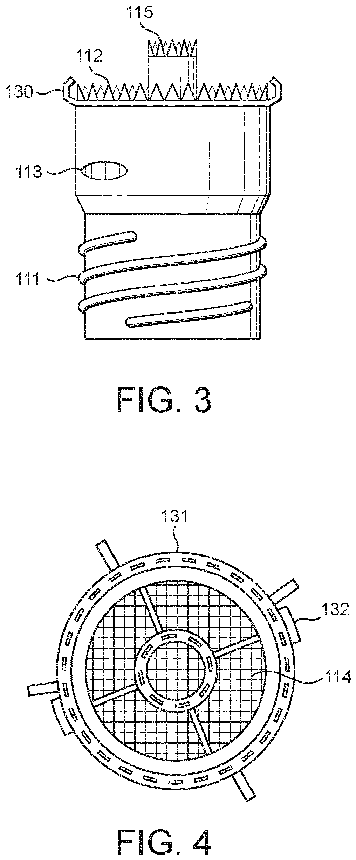

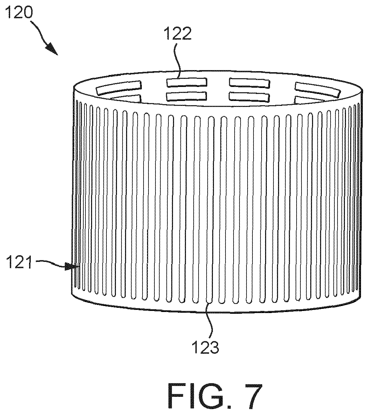

The storage compartment 120 as shown in **figures 2** **and** **7** includes a manual gripping portion 121 and is cup shaped. An upper part of the storage compartment 120 facing the bottom portion 110 includes a threading or other mechanical connection means, e.g. an inner threading 122. The inner threading 122 is configured to engage with a threading or a corresponding mechanical connection means of the bottom portion 110, e.g. an outer threading 111 (see **figure 3**). In other embodiments, the storage compartment 120 could include an outer threading and the bottom portion includes an inner threading. Other mechanical connections may include, for example, a bayonet connection, a friction fit, or a snap fit.

The manual gripping portion 121 includes ridges 123 for holding and screwing the storage compartment 120 to the bottom portion. As shown in **figure 7****,** the ridges 123 may extend longitudinally. In other embodiments, the ridges of the gripping portion may also extend in another direction, e.g., circumferentially or at any other desired angle to the longitudinal axis of the storage compartment. Additionally or alternatively, the manual gripping portion 121 may include other features for increasing a grip of fingers, such as a roughened surface, knobs, etc. The storage compartment 120 defines a space for receiving and holding the solid and/or liquid components contained in the capsule.

The bottom portion 110 is shown in further detail in **figures 3 to 6****.** The side view of **figure 3** shows that the bottom portion has a generally cylindrical shape, is hollow and includes the threading 111 mentioned above for connecting to the storage compartment 120. The bottom portion 110 forms a duct, within which a sieve 114 (see **figure 4**) is arranged. The bottom portion 110 includes on its outer side two pushbuttons 113 that may be located on opposing sides of the cylindrical outer face. In other embodiments there may only be one pushbutton or more than two, i.e., three or four pushbuttons. The pushbuttons 113 may include a rugged surface, improving a grip when pressing a respective pushbutton 113. Alternatively to the pushbuttons 113, the bottom portion 110 may include any other suitable actuation means, such as a slider, a switch, or a toggle.

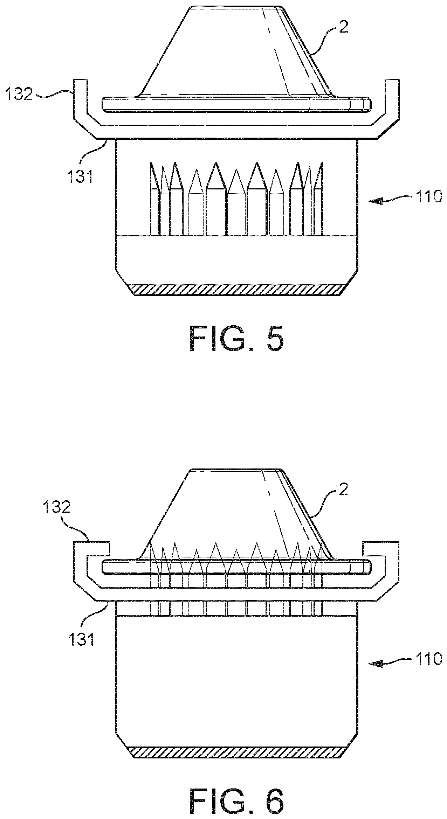

The bottom portion 110 includes a first set of cutting protrusions 112 and a second set of cutting protrusions 115. These cutting protrusions can be seen in **figures 3****,** **5 and 6****.** The cutting protrusions 112 and/or 115 are arranged at a longitudinal end of the bottom portion. The cutting protrusions 112 and/or 115 point (e.g., with their sharp ends) upward. The cutting protrusions 112 may be considered to be peripheral cutting protrusions. The cutting protrusions 115 are arranged radially inside of the peripherally arranged cutting protrusions 112. The cutting protrusions 115 may be considered to be central cutting protrusions. The cutting protrusions 112 may extend around the entire circumference of the bottom portion 110. Similar to the cutting protrusions 112, the cutting protrusions 115 may be arranged along a circle. As schematically indicated in **figures 5 and 6****,** both, the first set of cutting protrusions 112 and the second set of cutting protrusions 115, are spring-loaded. Upon pressing the one or more pushbuttons 113, one or more spring mechanisms are released. The one or more spring mechanisms move the cutting protrusions 112 and the cutting protrusions 115 upwards towards and/or into the capsule 2.

The capsule 2 is fixated on the bottom portion 110 via the capsule holder 130 (see **figures 2 to 6**). The top portion 130 includes a holding ring 131. The holding ring 131 is coupled to the bottom portion 110. E.g., it may be held securely on the bottom portion 110 via a groove, or by a flange. The holding ring 131 may be movable by rotating the holding ring 131 about its central axis.

The holding ring 131 includes gripping sections 132. The gripping sections 132 may have an open position (see **figure 5**) and a closed position (see **figure 6**). For example, the gripping sections 132 may be movable with respect to the ring 131 and latched into a closed position by being pushed radially inward by the user. In some embodiments, pressing pushbuttons 113 may cause the gripping sections 132 to move into the closed position prior to or during the movement of the cutting protrusions 112 and the movement of the cutting protrusions 115. Generally, the gripping sections 132 extend radially inwardly from the holding ring 131 and may, together with the ring 131, have a C-shape to grip the rim 3 of the capsule 2. Thereby, the capsule 2 may be securely held onto the bottom portion 110.

Alternatively, the gripping sections 132 may be rigid and the capsule 2 may be inserted by bending the capsule 2. Alternatively or additionally, the gripping sections 132 may be rigid and extend only around a portion of holding ring 131, e.g. at least 180° or at least 190° (e.g., in a C-shape). This may allow for the capsule to be pushed sideways into the capsule holder so that the rim comes to rest under the gripping sections 132 and is thereby retained.

Once the cutting protrusions 112 and the cutting protrusions 115 pierce the lid of the capsule 2, as can be seen in **figure 6**, the lid is opened and the contents of the capsule 2, such as liquid and/or solid contents, contained in the capsule fall into the bottom portion 110. The bottom portion 110 includes a sieve 114. The sieve 114 may extend over the entire hollow space within the bottom portion 110. The sieve 114 may include several sieve sections. For example, as seen in **figure 4**, the bottom portion 110 may include several bridges holding a ring. In between the bridges and the ring, several smaller sieves 114 are arranged. In other embodiments, the bottom portion may include a single sieve that extends over the entire cross-section of the bottom portion. The cross-section may be a cross-section perpendicular to a longitudinal axis of the bottom portion 110.

Openings of the sieve 114 preferably have a size of 3 to 5 mm. Thereby, solid components and liquid components contained in the capsule 2 may be separated from parts of the lid that are removed from the capsule 1 due to piercing with the cutting protrusions 112 and the cutting protrusions 115.

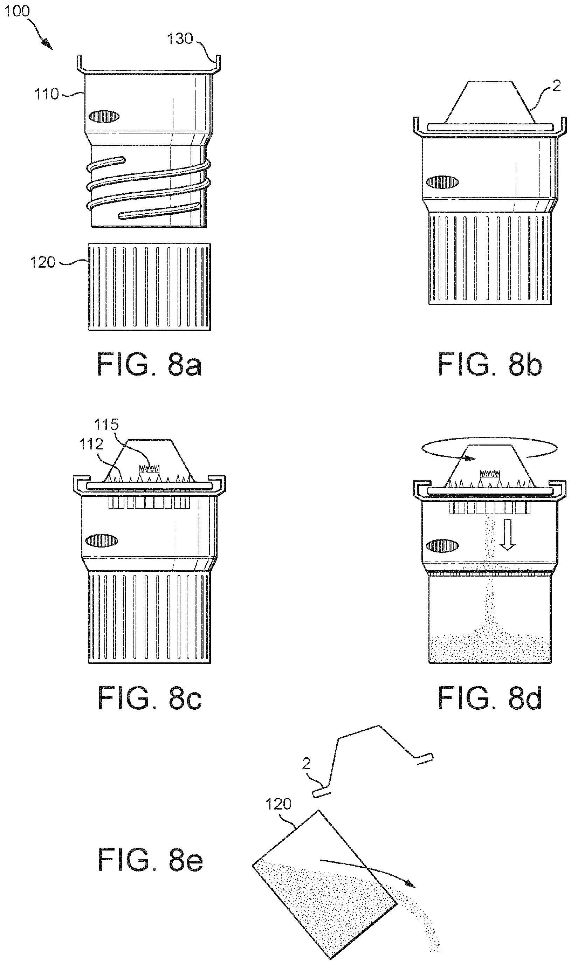

**Figures 8a to 8e** illustrate a process of removing solid contents from a capsule 2. **Figure 8a** shows the capsule opener 100 prior to insertion of the capsule 2. The gripping sections 132 are in an open position. The capsule 2 is inserted with the lid facing downward into the capsule opener 100 (**figure 8b**), more specifically in a capsule holder 130 coupled to a bottom portion 110 of the capsule opener 100. The capsule holder may be formed as a holding ring 131, as described above.

Once the capsule 2 is positioned accurately within the holding ring 131, the gripping sections 132 may be closed and the capsule 2 is held securely in the capsule opener 100 (**figure 8c**). Then, upon pushing the two pushbuttons 113, the first set of cutting protrusions 112 and the second set of cutting protrusions 115 move along the longitudinal axis of the bottom portion 110 into capsule 2 and cut through the lid of the capsule 2. Thereby, portions of the lid and the contents within the capsule 2 are released and fall into a sieve 114 (**figure 8d**). The portions of the capsule (i.e., the lid) are held back by the sieve 114 while the contents of the capsule fall through the sieve 114 into a storage compartment 120. In some embodiments, the sieve 114 may also be placed in the storage compartment 120. This may allow for easy removal of the sieve, e.g. when cleaning the storage compartment 120.

The cutting protrusions 112 and the cutting protrusions 115 may be brought back into their starting position, for example using a slider or by directly pushing the cutting protrusions back into the bottom portion 110 (e.g., with a tool). A wiper feature (not shown) may be provided within the bottom portion 110 to automatically remove portions of the lid retained on the cutting protrusions 112 or 115 when these cutting protrusions 112 or 115 are brought back into their starting position.

Then, the same process may be repeated with the next capsule. After several capsules have been emptied, the storage compartment 120 and optionally the bottom portion 110 may need to be emptied. In this case, the bottom portion 110 is unscrewed from storage compartment 120 and the contents collected in the storage compartment 120 can be disposed as shown in **figure 8e****.** For example, if the capsules contain ground coffee, the collected coffee grounds can be composted. The emptied capsule can then be recycled. For example, an aluminum capsule can be recycled with other aluminum waste.

The following aspects are preferred embodiments of the invention:
1. A capsule opener (1, 100) for emptying solid and/or liquid contents of an extracted beverage capsule, the capsule (2) comprising a body (4) forming a compartment containing the contents and a lid for closing said compartment, the capsule opener (1, 100) comprising:
   a bottom portion (10, 110) including a bottom portion housing with at least one protrusion (12), the at least one protrusion (12) being arranged for piercing through and opening the lid, and
   a storage compartment (20, 120) for receiving the solid and/or liquid contents from the capsule (2), wherein the storage compartment (20, 120) is arranged below the at least one protrusion (12).
2. The capsule opener (1, 100) of aspect 1, wherein the bottom portion (10, 110) comprises a sieve (114) and wherein the sieve (114) is arranged between the storage compartment (20, 120) and the at least one protrusion (12), wherein the sieve (114) preferably has mesh openings larger than a ground coffee particle size, more preferably at least 3, at least 4 mm or at least 5 mm.
3. The capsule opener (1) of any one of the preceding aspects,
   the capsule opener (1) further comprising a top portion;
   wherein the top portion includes a top portion housing with a capsule holder to hold the capsule (2) therein, the capsule holder being arranged opposite the at least one protrusion (12) when the top portion and the bottom portion (10) are in an operative position.
4. The capsule opener (1) of aspect 3, wherein the capsule holder is movable towards the bottom portion (10) in order to arrange the bottom and top portions in the operative position, wherein the at least one protrusion (12) is configured to pierce through the lid during said relative movement of the top and bottom portions (10) to create an opening in the lid.
5. The capsule opener (1) of aspect 4, wherein the capsule holder is rotatable with respect to the bottom portion (10) in the operative position in order to enlarge the opening in the lid.
6. The capsule opener (1) of any one of the aspects 3 to 5, wherein the capsule holder includes one or more holder side walls, wherein the one or more holder side walls have a conical shape and/or wherein the capsule holder includes a holder bottom wall.
7. The capsule opener (1) of aspect 6, wherein at least one of the one or more holder side walls and the holder bottom wall includes one or more surface projections, such as ridges, wherein the one or more surface projections extend in a radial direction of the capsule holder.
8. The capsule opener (1, 100) of any one of the preceding aspects,
   the capsule opener (1, 100) further comprising a capsule holder (130);
   wherein the capsule holder (130) includes a holding ring (131) configured hold the body (4) of the capsule (2).
9. The capsule opener (1, 100) of any one of the preceding aspects, wherein the top portion (130) and/or the bottom portion (10, 110) comprise a manual gripping portion (121), preferably with manual gripping ridges (123).
10. The capsule opener (100) of any one of the preceding aspects, wherein the at least one protrusion (112, 115) is retractable.
11. The capsule opener (100) of aspect 10, wherein the at least one protrusion (112, 115) is movably mounted in the bottom portion (110), preferably wherein the at least one protrusion (112, 115) is biased towards the capsule (2), preferably wherein the at least one protrusion (112, 115) is configured to be released by pressing on a release actuator, such as a button (113) placed along an external wall of the bottom portion (110).
12. The capsule opener (1, 100) of any one of the preceding aspects, comprising at least one central protrusion (115) and/or at least one peripheral protrusion (12, 112).
13. The capsule opener (1, 100) of any one of the preceding aspects, comprising an actuator, wherein the actuator is configured to move the at least one protrusion (12, 112, 115) towards the capsule (2) and/or to rotate the at least one protrusion (12, 112, 115), preferably around a center axis of the capsule (2) or a center axis of the capsule opener.
14. The capsule opener (1, 100) of any one of the preceding aspects, wherein the at least one protrusion (12, 112, 115) comprises a cutting section configured to cut the lid, preferably to cut the lid along a cutting line extending at least partially along a radially outer contour of the lid.
15. The capsule opener (1, 100) of aspect 14, wherein the cutting line of the at least one protrusion (12, 112) defines a closed or substantially closed shape.
16. The capsule opener (1, 100) of aspect 14 or 15, wherein the cutting line is circular, oval, or rectangular.
17. The capsule opener (1, 100) of aspect 2 and one of aspects 14 to 16, wherein the bottom portion (10, 110) includes a duct, wherein a first duct opening is defined by the cutting line, wherein the sieve (114) is arranged in the duct, and wherein the storage compartment (20, 120) is connected to a second duct opening.
18. The capsule opener (1, 100) of any one of the preceding aspects, wherein the at least one protrusion (12) is triangular, in particular saw-toothed.
19. The capsule opener (1, 100) of any one of the preceding aspects, comprising a plurality of protrusions (12), preferably wherein the protrusions (12) are arranged along the contour of the lid.
20. The capsule opener (1, 100) of aspect 19, wherein the protrusions (12) are arranged along the entire cutting line.
21. The capsule opener (1, 100) of any one of the preceding aspects, wherein the body (4) comprises:
   - a conical side wall, wherein the side wall preferably comprises an outwardly extending peripheral rim (3) or flange, more preferably wherein the lid is attached to the side wall via the rim (3) or flange; and/or
   - a bottom wall connected to the conical side wall.
22. A method of use of a capsule opener (1, 100), comprising the steps of:
   - providing a capsule opener (1, 100) according to any one of the preceding aspects;
   - forming an opening in the lid of the capsule (2) with the at least one protrusion (12); and
   - emptying the solid and/or liquid contents from the capsule compartment into the storage compartment (20, 120).
23. A method of emptying a capsule compartment, comprising the steps of:
   - providing a capsule (2) comprising a body (4) and a lid, the body (4) forming a compartment containing solid and/or liquid contents after extraction of the capsule (2) and the lid closing said compartment;
   - providing a capsule opener (1, 100) including a bottom portion (10, 110) and a storage compartment (20, 120), wherein the bottom portion (110) comprises at least one protrusion (12, 112, 115);
   - placing the capsule (2) onto the bottom portion (10, 110) with the lid facing downward;
   - piercing the lid with the protrusion (12, 112, 115) to form an opening in the lid;
   - emptying the solid and/or liquid contents from the capsule compartment into the storage compartment (20, 120).
24. The method of aspect 22 or 23, further comprising:
   - inserting the capsule (2) into a capsule holder of a top portion, wherein the lid is exposed towards the at least one protrusion (12).
25. The method of aspect 24, comprising the step of twisting the top and bottom portion (10) after piercing the lid with the protrusion (12).
26. The method of any one of aspects 22 to 25, wherein the opening in the lid comprises at least 40, 50, 60, 70 or 80% of the surface area of the lid.
27. A system comprising a capsule (2) and a capsule opener (1, 100) according to any one of aspects 1 to 21.

## Claims

1. A capsule opener (1, 100) for emptying solid and/or liquid contents of an extracted beverage capsule, the capsule (2) comprising a body (4) forming a compartment containing the contents and a lid for closing said compartment, the capsule opener (1, 100) comprising:
a bottom portion (10, 110) including a bottom portion housing with at least one protrusion (12), the at least one protrusion (12) being arranged for piercing through and opening the lid, and
a storage compartment (20, 120) for receiving the solid and/or liquid contents from the capsule (2), wherein the storage compartment (20, 120) is arranged below the at least one protrusion (12).

2. The capsule opener (1, 100) of claim 1, wherein the bottom portion (10, 110) comprises a sieve (114) and wherein the sieve (114) is arranged between the storage compartment (20, 120) and the at least one protrusion (12, 112 115),

3. The capsule opener (1, 100) of claim 2, wherein the sieve (114) has mesh openings of at least 3 mm in width, length and/or diameter.

4. The capsule opener (100) of any one of the preceding claims,
the capsule opener (100) further comprising a capsule holder (130);
wherein the capsule holder (130) includes a holding ring (131) configured to hold a flange (4) of the capsule (2) against the bottom portion (110).

5. The capsule opener (1, 100) of any one of the preceding claims, wherein bottom portion (10, 110) comprises a manual gripping portion (121).

6. The capsule opener (100) of any one of the preceding claims, wherein the at least one protrusion (112, 115) is retractable.

7. The capsule opener (100) of any one of the preceding claims, wherein the at least one protrusion (112, 115) is movably arranged in the bottom portion (110), wherein the at least one protrusion (112, 115) in a starting position thereof is spring biased towards the capsule (2), preferably wherein the at least one protrusion (112, 115) is configured to be released and automatically moved into the lid of the capsule (2) upon actuation by a user.

8. The capsule opener (1, 100) of any one of the preceding claims, comprising at least one central protrusion and/or at least one peripheral protrusion.

9. The capsule opener (1, 100) of any one of the preceding claims, comprising an actuator, wherein the actuator is configured to move the at least one protrusion (12, 112, 115) towards the capsule (2) and/or rotate the at least one protrusion (12, 112, 115), preferably around a center axis of the capsule (2) or the capsule opener.

10. The capsule opener (1, 100) of any one of the preceding claims, wherein the at least one protrusion (12, 112) comprises a cutting section configured to cut the lid, preferably to cut the lid along a cutting line extending at least partially along a radially outer contour of the lid.

11. The capsule opener (1, 100) of claim 9, wherein the cutting line of the at least one protrusion (12, 112) defines a closed or substantially closed shape.

12. The capsule opener (1, 100) of any one of the preceding claims, wherein the at least one protrusion (12, 112, 115) is triangular, preferably saw-toothed.

13. The capsule opener (1, 100) of any one of the preceding claims, comprising a plurality of protrusions (12, 112), preferably wherein the protrusions (12, 112) are arranged along the contour of the lid.

14. A method of emptying an extracted beverage capsule (2), comprising the steps of:
• providing a capsule (2) comprising a body (4) and a lid, the body (4) forming a compartment containing solid and/or liquid contents after extraction of the capsule (2) and the lid closing said compartment;
• providing a capsule opener (1, 100) including a bottom portion (10, 110) and a storage compartment (20, 120), wherein the bottom portion (110) comprises at least one protrusion (12, 112, 115);
• placing the capsule (2) onto the bottom portion (10, 110) with the lid facing downward;
• piercing the lid with the protrusion (12, 112, 115) to form an opening in the lid;
• emptying the solid and/or liquid contents from the capsule compartment into the storage compartment (20, 120).

15. A system comprising a capsule (2) and a capsule opener (1, 100) according to any one of claims 1 to 13.
